# DEMANDE DE BREVET EUROPEEN

(11) **EP 4 715 648 A1**
(43) Date de publication de la demande: **25.03.2026**
(21) Numéro de dépôt: 25201474.1
(22) Date de dépôt: 10.09.2025
(51) Int. Cl.: G06F 21/57, H04L 9/40

(54) **PROCÉDÉ D'ESTIMATION D'UN SCORE DE RISQUE DÉCOULANT D'UNE VULNÉRABILITÉ D'UN ACTIF INFORMATIQUE**

(30) Priorité: 23.09.2024 FR 2410115
(71) Demandeur: Hackuity, 69009 Lyon (FR)
(72) Inventeur: BLANC, Wilfrid, 73350 BOZEL (FR); RAGARU, Patrick, 69300 CHASSELAY (FR)
(74) Mandataire: Ipsilon

(57) **Abrégé**

L'invention concerne un procédé d'estimation d'un score de risque découlant d'une vulnérabilité d'un actif informatique, comportant une première étape (1) d'estimation d'un score de criticité, en prenant en compte le vecteur possible d'attaque.

Le procédé selon l'invention est particulier en ce qu'il comporte les étapes suivantes :
- une deuxième étape (2) d'estimation d'un score de menace, en prenant en compte un score d'exploitabilité déterminé en recherchant, dans une base de données, si une preuve de concept d'exploitation de ladite vulnérabilité existe, un kit d'exploitation est publié, ou une exploitation a déjà eu lieu,
- une troisième étape (3) d'estimation d'un score d'impact dudit actif informatique, en prenant en compte un score de criticité dudit actif, en termes de confidentialité, intégrité et disponibilité,
- calcul dudit score de risque comme étant proportionnel au produit du score de criticité, du score de menace, et du score d'impact.

## Description

### Domaine technique

La présente invention concerne le domaine de la sécurité informatique. Plus particulièrement, elle concerne un procédé d'estimation d'un score de risque, découlant d'une vulnérabilité identifiée d'un actif informatique.

L'invention trouve une application particulièrement avantageuse pour obtenir un score de risque qui soit le plus pertinent possible, dans le but de déterminer le degré d'urgence qu'il y a à traiter une vulnérabilité donnée, et ainsi de prioriser le traitement des vulnérabilités.

### Technique antérieure

La sécurité informatique est aujourd'hui un domaine au centre duquel se trouvent des enjeux économiques et stratégiques fondamentaux pour toute organisation publique ou privée.

Une vulnérabilité portant sur un actif informatique d'un système informatique peut être définie comme étant une faiblesse du système informatique permettant à un attaquant de porter atteinte à l'intégrité de cet actif, c'est-à-dire à son fonctionnement normal, à la confidentialité ou à l'intégrité des données qu'il contient.

Il est primordial pour les personnes telles que les gestionnaires de systèmes informatiques, et leurs fournisseurs, de chercher à éviter de telles attaques, et particulièrement éviter les attaques les plus nuisibles. Pour cela, il est nécessaire d'identifier les vulnérabilités, et parmi celles-ci d'identifier les vulnérabilités à traiter en priorité. Un tel traitement consiste en général en une mise à jour logicielle de sécurité, qui rend sans objet la vulnérabilité.

Il existe différentes méthodes, afin de déterminer l'importance réelle d'une vulnérabilité et le degré d'urgence qu'elle présente.

Une des méthodes les plus couramment utilisées est l'utilisation du Système commun d'évaluation des vulnérabilités (en anglais « Common Vulnerability Scoring System », ou « CVSS »). Le CVSS est une méthode utilisée pour fournir une mesure qualitative de la gravité. Le CVSS n'est donc pas une mesure du risque, car il ne prend pas en compte des informations supplémentaires pour donner un résultat complet par rapport au contexte réel de l'entreprise.

Le problème technique résolu par l'invention est donc de proposer un procédé d'estimation d'un score d'estimation d'un score de risque, prenant en compte toutes les informations pertinentes, et les rassemblant de façon innovante afin d'obtenir un score pertinent pour connaître le degré d'urgence posé par une vulnérabilité, et facile à interpréter. Ce procédé est utilisable avec tout type de vulnérabilité, et permet donc de comparer le degré de risque posé par des vulnérabilités de différents types.

### Exposé de l'invention

La présente invention vise à pallier ces inconvénients en proposant un procédé d'estimation d'un score de risque découlant d'une vulnérabilité d'un actif informatique, comportant une étape d'estimation d'un score de criticité de ladite vulnérabilité, en prenant en compte le vecteur par lequel une attaque informatique exploitant ladite vulnérabilité est possible.

Ce procédé est particulier en ce qu'il comporte en outre les étapes suivantes :
- estimation d'un score de menace de ladite vulnérabilité, en prenant en compte un score d'exploitabilité de ladite vulnérabilité, ledit score d'exploitabilité étant déterminé en recherchant, dans une base de données de vulnérabilités connues, si une preuve de concept d'exploitation de ladite vulnérabilité existe, un kit d'exploitation de ladite vulnérabilité est publié, ou une exploitation de ladite vulnérabilité a déjà eu lieu,
- estimation d'un score d'impact dudit actif informatique, en prenant en compte un score de criticité dudit actif dans le système informatique dont il fait partie, en termes de confidentialité, intégrité et disponibilité,
- calcul dudit score de risque comme étant proportionnel au produit du score de criticité de la vulnérabilité, du score de menace de vulnérabilité, et du score d'impact dudit actif informatique.

Grâce à ces dispositions, un score de risque particulièrement pertinent peut être affecté à une vulnérabilité, ceci permettant de prioriser de façon pertinente les vulnérabilités à traiter.

L'étape d'estimation du score de menace de la vulnérabilité peut comporter une sous-étape d'estimation d'un score de probabilité d'exploitation, ladite estimation pouvant être réalisée en utilisant une base de données d'exploitations connues de vulnérabilités.

L'étape d'estimation du score de menace de la vulnérabilité peut comporter une sous-étape d'estimation d'un score de maturité de l'exploitation de ladite vulnérabilité, ladite estimation pouvant être réalisée en utilisant une base de données d'exploitations connues de ladite vulnérabilité.

De préférence, l'étape d'estimation du score de menace de la vulnérabilité comporte une sous-étape d'estimation d'un score d'intensité de menace, ladite estimation pouvant comporter une consultation d'une base de données de rançongiciels pour déterminer s'il existe un rançongiciel connu exploitant ladite vulnérabilité.

Selon un mode de réalisation, l'étape d'estimation d'un score d'impact comporte une sous-étape d'estimation d'un score d'accessibilité dudit actif informatique, prenant en compte le fait que ledit actif informatique soit directement accessible sur le réseau Internet, ou non.

L'étape d'estimation d'un score d'impact peut comporter une sous-étape d'estimation d'un score de mesures de détection, prenant en compte les moyens mis en place pour détecter d'éventuelles attaques informatiques sur ledit actif informatique.

L'étape d'estimation d'un score d'impact peut comporter une sous-étape d'estimation d'un score de mesures de protection, prenant en compte les moyens mis en place pour assurer la sécurité informatique dudit actif informatique.

L'étape d'estimation d'un score d'impact peut comporter une sous-étape d'estimation d'un score de distribution, prenant en compte le nombre d'actifs déployés dans une organisation.

### Brève description des dessins

La présente invention et ses avantages apparaîtront mieux dans la description suivante de plusieurs modes de réalisation donnés à titre d'exemples non limitatifs, en référence au dessin annexé, dans lequel:

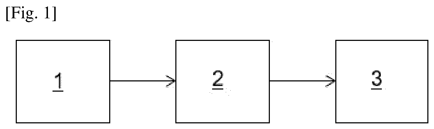

[Fig 1] est une vue schématique du procédé selon l'invention.

### Description des modes de réalisation

En référence à la figure 1, le procédé selon l'invention permet d'estimer un score de risque découlant d'une vulnérabilité d'un actif informatique.

Un actif informatique est un élément d'un système informatique géré par exemple par une organisation telle qu'une société privée, une association, ou encore une structure publique.

L'actif informatique comporte en général :
- une partie matérielle : par exemple un serveur, un ordinateur, un périphérique connecté tel qu'un écran, une imprimante, etc. La partie matérielle peut se trouver proche des utilisateurs, sur le même site d'activité, ou à distance, par exemple un serveur ou un groupe de serveurs accessibles via un système d'informatique à distance (ou « cloud » en anglais), et
- une partie logicielle, c'est-à-dire un ou plusieurs programmes informatiques stockés sur et/ou interagissant avec la partie matérielle, ou une partie « données », comportant une ou plusieurs bases de données.

Le procédé selon l'invention comporte principalement au moins trois étapes :
- une première étape 1 d'estimation d'un score de criticité SC de la vulnérabilité,
- une deuxième étape 2 d'estimation d'un score de menace SM de la vulnérabilité, et
- une troisième étape 3 d'estimation d'un score d'impact SI de l'actif informatique.

A partir de ces trois scores SC, SM, SI, le score de risque SR est obtenu en calculant leur produit : SR = SC x SM x SI.

La première étape 1 d'estimation du score de criticité SC de la vulnérabilité prend en compte le vecteur par lequel l'attaque informatique exploitant la vulnérabilité est possible, c'est-à-dire le contexte dans lequel l'exploitation de la vulnérabilité est possible.

On définit par exemple quatre types de vecteur possibles :
- physique : l'attaque nécessite que l'attaquant touche ou manipule physiquement le système vulnérable,
- local : la vulnérabilité n'est pas accessible par le réseau, le chemin de l'attaquant passe par les capacités de lecture/écriture/exécution,
- adjacent : la vulnérabilité est accessible par le réseau, mais l'attaque est limitée au niveau du protocole à une topologie logiquement adjacente,
- réseau : la vulnérabilité est accessible par tout réseau, jusqu'à et incluant tout l'Internet.

Les vecteurs ci-dessus sont mentionnés par ordre de sévérité croissante, le score de criticité SC est donc plus élevé lorsque le vecteur sera « réseau » que lorsque le vecteur est « physique ».

La première étape 1 d'estimation du score de criticité SC de la vulnérabilité peut également prendre en compte la complexité de l'attaque. Ainsi, lorsque l'attaquant ne doit prendre aucune mesure spécifique, par exemple de contournement, pour exploit er la vulnérabilité, la complexité est considérée comme basse, ce qui contribue à un score de criticité plus haut. Au contraire, lorsque la réussite de l'attaque dépend du contournement de techniques de renforcement de la sécurité en place, la complexité peut être considérée haute, et le score de criticité plus bas.

Finalement, le score de criticité SC peut prendre en compte un certain nombre d'autres métriques, telles qu'une ou plusieurs métriques utilisées pour calculer le score CVSS. Alternativement, le score de criticité SC peut correspondre au score CVSS, par exemple dans sa version 4.0.

Le score de criticité SC peut être présenté sous la forme d'un nombre, par exemple un nombre compris entre 0 et 10 inclus, avec un chiffre après la virgule.

La deuxième étape 2 d'estimation d'un score de menace SM de la vulnérabilité prend en compte un score d'exploitabilité de ladite vulnérabilité, représentant la possibilité de mise en œuvre et d'utilisation de la vulnérabilité par un attaquant. Le score d'exploitabilité peut être représenté sous forme booléenne (VRAI / FAUX), et des scores numériques peuvent ensuite être associés au valeurs VRAI ou FAUX. Si l'exploitabilité est fausse, le score associé est un score relativement bas, par exemple 10, alors que si elle est vraie, le score utilisé est un score relativement haut, par exemple 1000.

Pour déterminer le score d'exploitabilité, la deuxième étape 2 comporte une sous-étape de recherche, dans une base de données de vulnérabilités connues, afin de déterminer au moins si une preuve de concept d'exploitation de ladite vulnérabilité existe, un kit d'exploitation de ladite vulnérabilité est publié, ou une exploitation de ladite vulnérabilité a déjà eu lieu. Si au moins une de ces conditions est réunie, le score d'exploitabilité peut être défini comme VRAI, et si aucune n'est réunie, il peut être défini comme FAUX. Afin de déterminer ce score, la base de données « KEV » (pour « Known Exploited Vulnerabilities ») de l'agence américaine « CISA » (pour « Cybersecurity and Infrastructure Security Agency ») peut être utilisée.

La deuxième étape 2 d'estimation d'un score de menace SM de la vulnérabilité peut comporter une sous-étape d'estimation d'un score de probabilité d'exploitation. Cette estimation est réalisée en utilisant une base de données d'exploitations connues de vulnérabilités. Elle peut comporter un calcul de probabilité se présentant sous forme d'un pourcentage, par exemple selon le système connu EPSS (pour l'anglais « Exploit Prediction Scoring System »).

A partir de cette probabilité disponible en pourcentage, le score de probabilité d'exploitation peut être calculé en classant la vulnérabilité dans une des catégories suivantes, et lui affecter un score numérique croissant avec l'importance du risque, par exemple :
- probabilité inférieure à 25% : probabilité basse : score par exemple de 25,
- probabilité comprise entre 25% et 50% : probabilité moyenne : score par exemple de 50,
- probabilité comprise entre 50% et 75% : probabilité haute : score par exemple de 500,
- probabilité comprise entre 75% et 100% : probabilité critique : score par exemple de 1000,
- non applicable : score moyen, par exemple compris entre 380 et 420, par exemple 394.

La deuxième étape 2 d'estimation d'un score de menace SM de la vulnérabilité peut également comporter une sous-étape d'estimation d'un score de maturité de l'exploitation de ladite vulnérabilité. Ce score indique le degré de maturité des exploitations de la vulnérabilité et la mesure dans laquelle les attaquants sont capables de lancer une attaque en utilisant cette vulnérabilité. Cette estimation est réalisée en utilisant une base de données d'exploitations connues de ladite vulnérabilité.

Comme pour le score d'exploitabilité, le calcul du score de maturité de l'exploitation peut prendre en compte si une preuve de concept d'exploitation de ladite vulnérabilité existe, un kit d'exploitation de ladite vulnérabilité est publié, ou une exploitation de ladite vulnérabilité a déjà eu lieu. En fonction du degré de maturité, des score numériques croissant avec l'importance du risque peuvent être affectés, par exemple :
- maturité indéfinie : score bas, par exemple 25,
- preuve de concept existante : score moyen, par exemple 50,
- kit d'exploitation publié : score haut, par exemple 75,
- exploitation de la vulnérabilité a déjà eu lieu : score très haut, par exemple 100.

La deuxième étape 2 d'estimation d'un score de menace SM de la vulnérabilité peut encore comporter une sous-étape d'estimation d'un score d'intensité de menace. Cette estimation comporte une consultation d'une base de données de rançongiciels pour déterminer s'il existe un rançongiciel connu exploitant cette vulnérabilité.

En plus de l'existence d'un rançongiciel, la sous-étape d'estimation d'un score d'intensité de menace peut déterminer si une ou plusieurs des conditions suivantes sont réunies, et affecter un score numérique à chacune de ces conditions, le score étant croissant avec l'importance du risque, :
- scan d'une adresse IP de l'actif informatique par un attaquant anonyme : score par exemple de 1,
- vulnérabilité « in the wild », c'est-à-dire active sous forme d'un malware sur des machines appartenant à des utilisateurs ordinaires : score plus élevé que ci-dessus, par exemple de 2,
- vulnérabilité connue sur des forums spécialisés : score plus élevé que ci-dessus, par exemple de 3,
- vulnérabilité connue sur un réseau social grand public tel que X (marque déposée) : score plus élevé que ci-dessus, par exemple de 4,
- vulnérabilité identifiée comme une menace persistence avancée (« APT », pour l'anglais « Advanced persistent thread ») : score plus élevé que ci-dessus, par exemple de 5,
- existence d'un rançongiciel connu exploitant cette vulnérabilité : score plus élevé que ci-dessus, par exemple de 6.

Une fois les conditions ci-dessus vérifiées, les scores de chacune des conditions vraies peuvent être additionnés, pour obtenir un score intermédiaire.

A partir de ce score intermédiaire, le score d'intensité de menace peut être calculé en classant la vulnérabilité dans une des catégories suivantes, et lui affecter un score numérique croissant avec l'importance du risque, par exemple :
- score intermédiaire compris entre 0 et 1 inclus : intensité basse : score par exemple de 25,
- score intermédiaire compris entre 2 et 6 inclus : intensité moyenne : score par exemple de 50,
- score intermédiaire compris entre 7 et 13 inclus : probabilité haute : score par exemple de 75,
- score intermédiaire supérieur ou égal à 14 : probabilité critique : score par exemple de 100,
- non applicable : score moyen, par exemple compris entre 55 et 70, par exemple 62,5.

Dans un mode de réalisation préféré de l'invention, la deuxième étape d'estimation du score de menace SM de la vulnérabilité comporte des sous-étapes de calcul des quatre scores mentionnés ci-dessus : le score d'exploitabilité, le score de probabilité d'exploitation, le score de maturité de l'exploitation de la vulnérabilité, et le score d'intensité de menace.

Afin de rassembler ces quatre scores et d'obtenir le score de menace SM, les calculs suivants peuvent être effectués, se basant sur le fait que chacun des quatre scores ne peut prendre qu'un nombre fini de valeurs :
- détermination de N comme étant le nombre de combinaisons possibles des quatre scores. Dans les exemples détaillés ci-dessus, le score d'exploitabilité peut prendre deux valeurs distinctes, et les autres scores cinq valeurs distinctes chacun. On a donc dans cet exemple N = 2 x 5 x 5 x 5 = 250,
- classement des N combinaisons possibles de scores, en multipliant entre eux les quatre scores pour chaque combinaison, et en classant les combinaisons par ordre croissant des produits obtenus. Par exemple, le produit le plus bas correspondra à un score d'exploitabilité de 10, un score de probabilité d'exploitation de 25, un score de maturité de l'exploitation de la vulnérabilité de 25, et un score d'intensité de menace de 25. Lorsque deux produits sont égaux, on peut classer les combinaisons en priorisant un des scores, par exemple en donnant plus de poids au score d'exploitabilité qu'au score de probabilité d'exploitation, au score de probabilité d'exploitation qu'au score de maturité de l'exploitation de la vulnérabilité, au score de maturité de l'exploitation de la vulnérabilité qu'au score d'intensité de menace. On obtient pour chacune des N combinaisons un rang R prenant une valeur comprise entre 0 à N-1. Alternativement, lorsque deux produits sont égaux, on peut leur donner un rang R identique.

- calcul du score de menace SM selon la formule suivante :
   SM = (5 x R^{0,2})/(N-1)^{0,2} + B, avec B par exemple égal à 5, pour obtenir un score compris entre 5 et 10. Dans la pratique, ce calcul peut être réalisé en amont pour les N combinaisons possibles de scores, et à chaque combinaison peut être associée un score de menace SM précalculé.

La troisième étape 3 d'estimation d'un score d'impact SI de l'actif informatique prend en compte un score de criticité de l'actif dans le système informatique dont il fait partie. Ce score de criticité reflète la criticité de l'actif en termes d'au moins trois attributs : confidentialité, intégrité et disponibilité. La méthode de la « triade CIA » peut être utilisée pour donner à chacun de ces attributs un score (indéfini, bas, moyen, haut, critique), et la combinaison des scores des trois attributs peut être utilisée pour déterminer le score de criticité. Cette combinaison est par exemple obtenue en relevant le score le plus haut des trois attributs, sauf dans le cas où au moins deux attributs ont un score « haut », auquel cas le score combiné est de « critique ».

Le score de criticité peut alors être converti en valeurs numériques, croissantes avec l'importance du risque, par exemple :
- indéfini : valeur de 50,
- bas : valeur de 25,
- moyen : valeur de 50,
- haut : valeur de 75,
- critique : valeur de 100.

La troisième étape 3 d'estimation d'un score d'impact SI de l'actif informatique peut également comporter une sous-étape d'estimation d'un score d'accessibilité dudit actif informatique. Cette estimation prend en compte le fait que l'actif informatique soit directement accessible sur le réseau Internet, ou non. De façon plus fine, le score d'accessibilité peut refléter l'accessibilité de l'actif informatique pour un attaquant externe. Par exemple si l'actif est isolé physiquement de l'environnement extérieur, l'exposition est réduite et le risque correspondant l'est également. En revanche, si le bien est exposé sur l'Internet, il sera beaucoup plus facile pour un pirate de l'atteindre.

Le score d'accessibilité peut prendre des valeurs numériques différentes en fonction du type d'accessibilité, croissantes avec l'importance du risque, par exemple :
- indéfini : valeur de 40,
- isolé physiquement de l'environnement extérieur : valeur de 10,
- accessible sur un réseau local : valeur de 30,
- accessible sur un Intranet : valeur de 40,
- accessible par un appareil nomade : valeur de 100,
- accessible sur Internet : valeur de 1000.

La troisième étape 3 d'estimation d'un score d'impact SI de l'actif informatique peut également comporter une sous-étape d'estimation d'un score de mesures de détection. Cette estimation prend en compte les moyens mis en place pour détecter d'éventuelles attaques informatiques sur ledit actif informatique, par exemple la présence éventuelle d'un ou plusieurs pares-feux, systèmes de détection des intrusions (« IDS » pour l'anglais « Intrusion Detection Systems »), systèmes de prévention des intrusions (« IPS » pour l'anglais « Intrusion Prevention Systems »), etc.

Le score de mesures de détection peut prendre des valeurs numériques différentes en fonction des moyens de détection mis en place, ce score étant d'autant plus important que ces moyens sont faibles, par exemple :
- indéfini : valeur de 30,
- niveau des moyens de détection mis en place élevé (par exemple : ensemble des moyens de détections présents, correctement configurés et mis à jour) : valeur de 10,
- niveau basique (par exemple : ensemble des moyens de détections présents, correctement configurés et un process de mis à jour mal défini) : valeur de 30,
- niveau bas (par exemple : manque de moyens de détections et/ou problèmes de configuration et/ou de mis à jour) : valeur de 40,
- aucun moyen de détection mis en place : valeur de 50.

La troisième étape 3 d'estimation d'un score d'impact SI de l'actif informatique peut également comporter une sous-étape d'estimation d'un score de mesures de protection. Cette estimation prend en compte les moyens mis en place pour assurer la sécurité informatique dudit actif informatique, par exemple la présence éventuelle de mesures organisationnelles, de logiciels de type EDR (pour l'anglais « Endpoint Detection and Response ») ou XDR (pour l'anglais « Extended Detection and Response »), etc.

Le score de mesures de protection peut prendre des valeurs numériques différentes en fonction des moyens de protection mis en place, ce score étant d'autant plus important que ces moyens sont faibles, par exemple :
- indéfini : valeur de 30,
- niveau des moyens de détection mis en place élevé (par exemple : ensemble des moyens de protection présents, correctement configurés et mis à jour) : valeur de 10,
- niveau basique (par exemple : ensemble des moyens de protection présents, correctement configurés et un process de mis à jour mal défini) : valeur de 30,
- niveau bas (par exemple : manque de moyens de protection et/ou problèmes de configuration et/ou de mis à jour) : valeur de 40,
- aucun moyen de détection mis en place : valeur de 50.

La troisième étape 3 d'estimation d'un score d'impact SI de l'actif informatique peut également comporter une sous-étape d'estimation d'un score de distribution. Cette estimation prend en compte le nombre d'actifs déployés dans une organisation. Par exemple, une machine spécifique unique dotée de son propre système d'exploitation et mettant en œuvre un logiciel de démonstration spécifique a un faible score de distribution par rapport à la flotte d'ordinateurs portables des employés, car une attaque sur l'ordinateur portable d'un employé peut être largement diffusé sur toutes les autres machines.

Le score de distribution peut prendre des valeurs numériques différentes en fonction de l'étendue de la distribution, ce score étant d'autant plus important que le risque est important, par exemple :
- indéfini : valeur de 1,
- niveau de distribution mis en place élevé (par exemple : toute la flotte de l'entreprise a les mêmes souches logicielles et les mêmes versions déployées) : valeur de 10,
- niveau basique (par exemple : toute la flotte de l'entreprise a les mêmes souches logicielles et différentes versions déployées) : valeur de 30,
- niveau bas (par exemple : quelques machines de l'entreprise ont des souches logicielles communes) : valeur de 40,
- aucun moyen de distribution mis en place : valeur de 50.

Dans un mode de réalisation préféré de l'invention, la troisième étape d'estimation du score d'impact SI de l'actif informatique comporte des sous-étapes de calcul des cinq scores mentionnés ci-dessus : le score de criticité, le score d'accessibilité, le score de mesures de détection, le score de mesures de protection et le score de distribution.

Afin de rassembler ces cinq scores et d'obtenir le score d'impact SI, les calculs suivants peuvent être effectués, se basant sur le fait que chacun des cinq scores ne peut prendre qu'un nombre fini de valeurs :
- détermination de N comme étant le nombre de combinaisons possibles des cinq scores. Dans les exemples détaillés ci-dessus, le score d'accessibilité peut prendre six valeurs distinctes, et les autres scores cinq valeurs distinctes chacun. On a donc dans cet exemple N = 6 x 5 x 5 x 5 x 5 = 3750,
- classement des N combinaisons possibles de scores, en multipliant entre eux les cinq scores pour chaque combinaison, et en classant les combinaisons par ordre croissant des produits obtenus. Par exemple, le produit le plus bas correspondra à un score de criticité de 25, un score d'accessibilité de 10, un score de mesures de détection de 10, et un score de mesures de protection de 10, et un score de distribution de 1. Lorsque deux produits sont égaux, on peut classer les combinaisons en priorisant un des scores, par exemple en donnant plus de poids au score de criticité qu'au score d'accessibilité, au score d'accessibilité qu'au score de mesures de détection, au score de mesures de détection qu'au score de mesures de protection, et au score de mesures de protection qu'au score de distribution. On obtient pour chacune des N combinaisons un rang R prenant une valeur comprise entre 0 à N-1. Alternativement, lorsque deux produits sont égaux, on peut leur donner un rang R identique.

- calcul du score de d'impact SI selon la formule suivante :
   SI = (9 x R^{0,2})/(N-1)^{0,2} + B, avec B par exemple égal à 5, pour obtenir un score compris entre 5 et 10. Dans la pratique, ce calcul peut être réalisé en amont pour les N combinaisons possibles de scores, et à chaque combinaison peut être associée un score de menace SM précalculé.

Le procédé selon l'invention a été testé sur un certain nombre de vulnérabilités, et le score de risque obtenu a été comparé avec le score CVSS. Les tests ont été effectués sur 30524 vulnérabilités, réparties sur 3419 actifs informatiques. Le score CVSS a permis d'identifier 19638 vulnérabilités présentant un risque important, alors que le score de risque calculé selon la présente invention a permis d'identifier 1435 vulnérabilités présentant un risque important. Par rapport à l'utilisation du score CVSS, et sur l'échantillon testé, la présente invention a donc permis de réduire de 93% le nombre de vulnérabilités identifiées comme présentant un risque important. Cette diminution importante permet de prioriser de façon bien plus efficace les vulnérabilités à traiter.

La présente invention n'est bien entendu pas limitée aux exemples de réalisation décrits mais s'étend à toute modification et variante évidentes pour un homme du métier dans la limite des revendications annexées. En outre, les caractéristiques techniques des différents modes de réalisation et variantes mentionnés ci-dessus peuvent être, en totalité ou pour certaines d'entre elles, combinées entre elles.

## Revendications

1. Procédé d'estimation d'un score de risque découlant d'une vulnérabilité d'un actif informatique, comportant une première étape (1) d'estimation d'un score de criticité de ladite vulnérabilité, en prenant en compte le vecteur par lequel une attaque informatique exploitant ladite vulnérabilité est possible, ***caractérisé en ce que*** il comporte en outre les étapes suivantes :
- une deuxième étape (2) d'estimation d'un score de menace de ladite vulnérabilité, en prenant en compte un score d'exploitabilité de ladite vulnérabilité, ledit score d'exploitabilité étant déterminé en recherchant, dans une base de données de vulnérabilités connues, si une preuve de concept d'exploitation de ladite vulnérabilité existe, un kit d'exploitation de ladite vulnérabilité est publié, ou une exploitation de ladite vulnérabilité a déjà eu lieu,
- une troisième étape (3) d'estimation d'un score d'impact dudit actif informatique, en prenant en compte un score de criticité dudit actif dans le système informatique dont il fait partie, en termes de confidentialité, intégrité et disponibilité, la troisième étape comportant une sous-étape d'estimation d'un score de mesures de détection, prenant en compte les moyens mis en place pour détecter d'éventuelles attaques informatiques sur ledit actif informatique,
- calcul dudit score de risque comme étant proportionnel au produit du score de criticité de la vulnérabilité, du score de menace de vulnérabilité, et du score d'impact dudit actif informatique.

2. Procédé d'estimation d'un score de risque selon la revendication 1, **caractérisé en ce que** la deuxième étape (2) d'estimation du score de menace de la vulnérabilité comporte une sous-étape d'estimation d'un score de probabilité d'exploitation, ladite estimation étant réalisé en utilisant une base de données d'exploitations connues de vulnérabilités.

3. Procédé d'estimation d'un score de risque selon l'une quelconque des revendications 1 à 2, **caractérisé en ce que** la deuxième étape (2) d'estimation du score de menace de la vulnérabilité comporte une sous-étape d'estimation d'un score de maturité de l'exploitation de ladite vulnérabilité, ladite estimation étant réalisé en utilisant une base de données d'exploitations connues de ladite vulnérabilité.

4. Procédé d'estimation d'un score de risque selon l'une quelconque des revendications 1 à 3, **caractérisé en ce que** la deuxième étape (2) d'estimation du score de menace de la vulnérabilité comporte une sous-étape d'estimation d'un score d'intensité de menace, ladite estimation comportant une consultation d'une base de données de rançongiciels pour déterminer s'il existe un rançongiciel connu exploitant ladite vulnérabilité.

5. Procédé d'estimation d'un score de risque selon l'une quelconque des revendications 1 à 4, **caractérisé en ce que** la troisième étape (3) d'estimation d'un score d'impact comporte une sous-étape d'estimation d'un score d'accessibilité dudit actif informatique, prenant en compte le fait que ledit actif informatique soit directement accessible sur le réseau Internet, ou non.

6. Procédé d'estimation d'un score de risque selon l'une quelconque des revendications 1 à 5, **caractérisé en ce que** la troisième étape (3) d'estimation d'un score d'impact comporte une sous-étape d'estimation d'un score de mesures de protection, prenant en compte les moyens mis en place pour assurer la sécurité informatique dudit actif informatique.

7. Procédé d'estimation d'un score de risque selon l'une quelconque des revendications 1 à 6, **caractérisé en ce que** la troisième étape (3) d'estimation d'un score d'impact comporte une sous-étape d'estimation d'un score de distribution, prenant en compte le nombre d'actifs déployés dans une organisation.
